# DEMANDE DE BREVET EUROPEEN

(11) **EP 2 458 646 A2**
(43) Date de publication de la demande: **30.05.2012**
(21) Numéro de dépôt: 11190767.1
(22) Date de dépôt: 25.11.2011
(51) Int. Cl.: H01L 31/048

(54) **Systeme de realisation d'une paroi de mise hors d'eau d'un batiment, utilisant des panneaux solaires**

(30) Priorité: 26.11.2010 FR 1059803
(71) Demandeur: Carlod, Jérôme, 01100 Martignat (FR)
(72) Inventeur: Carlod, Jérôme, 01100 Martignat (FR)
(74) Mandataire: Jeannet, Olivier

(57) **Abrégé**

Ce système (1) comprend des profilés (2) destinés à être placés perpendiculairement au bord supérieur de la paroi à réaliser, des pièces (3) d'aménagement de gouttières d'évacuation des eaux de ruissellement entre des panneaux (100) adjacents, et des pièces (6) de positionnement des panneaux solaires (100) les uns par rapport aux autres, Selon l'invention :
- lesdits profilés (2) sont distincts des pièces (3) d'aménagement de gouttières et servent de supports à ces pièces (3) ;
- les pièces (3) sont formées par des profilés destinés à être montés sur ces profilés (2) ; et
- chaque pièce (6) de positionnement comprend une nervure centrale (15), destinée à être insérée entre deux panneaux solaires (100) adjacents, et des logements supérieurs (16) et inférieurs (17) destinés à recevoir de manière ajustée les panneaux solaires (100).

## Description

La présente invention concerne un système de réalisation d'une paroi de mise hors d'eau d'un bâtiment, utilisant des panneaux solaires. Cette paroi est principalement une toiture ou un pan de toiture ; il pourrait également s'agir d'une paroi de mur ou doublant un mur, proche de la verticale, ou de toute autre paroi quelque soit sa position (de la verticale à horizontale).

Il est connu de fixer des panneaux solaires à une toiture de bâtiment existante.

Il est également connu de réaliser directement une telle toiture au moyen de panneaux solaires, en aménageant une structure porteuse des panneaux solaires, qui inclut des gouttières d'évacuation des eaux de ruissellement tant dans une direction substantiellement perpendiculaire au faîte du toit que dans une direction substantiellement parallèle à ce faîte, et en juxtaposant les panneaux solaires les uns aux autres de telle sorte que leurs bords soient adjacents et qu'ils coïncident avec lesdites gouttières.

Les systèmes existants de ce type ne donnent pas parfaitement satisfaction. En effet, les moyens de positionnement des panneaux solaires sur la structure porteuse ne sont pas optimaux, en termes de coût de fabrication et de facilité d'utilisation. De plus, les structures porteuses devant être réalisées, de même que les réseaux de gouttières d'évacuation, sont complexes. En outre, les moyens destinés à constituer ces structures porteuses et gouttières d'évacuation, en profilés d'aluminium, sont relativement complexes à utiliser, difficiles à couper à longueur et à assembler, et relativement onéreux.

Le document N° FR 2 943 369 A1 divulgue un autre système existant, ne permettant pas de solutionner ces inconvénients, de par sa complexité de structure et de mise en oeuvre.

La présente invention vise à remédier à l'ensemble des inconvénients des systèmes existants.

Le système concerné comprend, de manière connue en soi par le document FR 2 943 369 A1, des pièces d'aménagement d'une structure porteuse servant au support des panneaux solaires, des profilés destinés à être placés perpendiculairement au bord supérieur de la paroi à réaliser, en dessous des bords des panneaux solaires perpendiculaires audit bord supérieur, des pièces d'aménagement de gouttières d'évacuation des eaux de ruissellement entre des panneaux adjacents, et des pièces de positionnement des panneaux solaires les uns par rapport aux autres.

Selon l'invention,
- lesdits profilés sont distincts des pièces d'aménagement de gouttières et servent de supports à ces pièces d'aménagement de gouttières ; ces profilés de support de gouttières ont une section carrée ou rectangulaire ;
- lesdites pièces d'aménagement de gouttières sont distinctes desdits profilés de support de gouttières et sont formées par des profilés destinés à être montés sur ces profilés de support de gouttières ; et
- chaque pièce de positionnement comprend une nervure centrale, destinée à être insérée entre deux panneaux solaires adjacents, deux logements supérieurs de part et d'autre de cette nervure centrale, destinés à recevoir de manière ajustée les angles de deux panneaux solaires adjacents, faisant partie d'un rang supérieur de panneaux solaires, et deux logements inférieurs de part et d'autre de cette nervure centrale, destinés à recevoir de manière ajustée les angles de deux panneaux solaires adjacents, faisant partie d'un rang inférieur de panneaux solaires.

L'invention fournit ainsi un système simple, comprenant des profilés de support de gouttière de section carrée ou rectangulaire, ayant une structure simple, et des pièces profilées d'aménagement de gouttières, distinctes de ces profilés. Ces pièces d'aménagement de gouttières ne nécessitent pas de raccordements complexes entre elles, peuvent se chevaucher au niveau des leurs zones de jonction longitudinales, et peuvent être constituées de pièces ayant une structure simple, aisées à couper, notamment en matière synthétique.

La simplicité du système selon l'invention résulte également de l'utilisation de pièces de positionnement adaptées, comprenant une nervure médiane servant d'entretoise pour le positionnement de panneaux solaires adjacents à une distance déterminée les uns des autres, et comprenant des logements de réception ajustée des angles de ces panneaux solaires, avec chevauchement des panneaux solaires inférieurs par les panneaux solaires supérieurs, cette pièce ayant une latitude de positionnement par rapport auxdits profilés de support et pièces d'aménagement de gouttières, au moins dans le sens longitudinal de ces profilés et pièces.

Selon une forme de réalisation de l'invention :
- lesdites pièces d'aménagement de la structure porteuse sont des chevrons à section carrée ou rectangulaire, et chaque profilé de support de gouttière est constitué par un de ces chevrons ;
- chaque pièce d'aménagement de gouttière comprend une partie de montage, destinée à permettre le montage de cette pièce sur un chevron, et au moins une gouttière destinée à s'étendre le long de ce chevron après montage sur ce dernier.

Cette pièce d'aménagement de gouttière procure ainsi l'avantage de recouvrir les vis ou tirefonds qui solidarisent le chevron à la structure qui le supporte, en particulier à la charpente d'une toiture, et donc de protéger ces vis ou tirefonds contre l'écoulement des eaux pluviales. Le chevron est lui-même protégé contre les infiltrations d'humidité, rendant possible l'utilisation de bois ou de matière synthétique pour le constituer. En outre, une parfaite étanchéité est obtenue dans les zones de jonction entre les chevrons et au niveau des zones de jonction entre des pièces d'aménagement de gouttières consécutives, par simple chevauchement de ces pièces.

Ladite partie de montage peut être plane et apte à recouvrir l'intégralité, ou au moins une majeure partie, de la face d'un chevron destinée à recevoir la pièce d'aménagement de gouttière, pour une parfaite protection du chevron.

De préférence, cette partie plane de montage est aménagée en position médiane sur ladite pièce d'aménagement de gouttière, et cette même pièce comprend deux gouttières latérales s'étendant le long des bords longitudinaux de cette partie de montage.

Ainsi, la pièce d'aménagement de gouttière recouvre entièrement la face d'un chevron destinée à la recevoir, en enveloppant toute cette face, et protège de cette façon le chevron contre les eaux pluviales et l'humidité, dans les meilleures conditions.

Avantageusement, dans ce cas, ladite partie de montage présente une largeur correspondant sensiblement à celle de ladite face d'un chevron.

Un auto-positionnement de la pièce d'aménagement de gouttière sur un chevron est ainsi réalisé, facilitant notablement la mise en place du système.

Selon une autre forme de réalisation de l'invention, chaque pièce d'aménagement de gouttière est en un matériau souple et comprend une partie centrale de montage sur un profilé de support de gouttière et deux parties latérales compressibles formant des joints latéraux destinés à recevoir les panneaux solaires, la gouttière étant délimitée par ladite partie centrale de montage et par ces deux parties latérales compressibles.

Les deux parties latérales compressibles permettent une parfaite étanchéité latérale de la gouttière ainsi qu'une étanchéité à l'air de la toiture obtenue.

De préférence,
- la nervure centrale de chaque pièce de positionnement comprend une rainure inférieure de centrage, et
- la partie centrale de chaque pièce d'aménagement de gouttière comprend une nervure de centrage sur laquelle chaque pièce de positionnement est apte à positionnée grâce à la rainure de centrage qu'elle comprend, dans la direction longitudinale de la chaque pièce d'aménagement de gouttière.
   Selon une forme de réalisation possible de ladite pièce de positionnement,
- les deux logements supérieurs de cette pièce sont délimités par une portion de cette pièce ayant, vue de profil, une forme en "U", c'est-à-dire apte à envelopper la portion d'angle d'un panneau solaire supérieur, en comprenant des parois supérieure, transversale et inférieure qui sont destinées à s'étendre respectivement le long de la face supérieure, le long de la tranche et le long de la face inférieure de cette portion d'angle ; et
- les deux logements inférieurs de cette même pièce sont délimités par une portion de cette pièce ayant, vue de profil, une forme en "L", c'est-à-dire formée par une paroi supérieure destinée à s'étendre le long de la face supérieure de la portion d'angle d'un panneau solaire inférieur, et une paroi transversale destinée à former une butée pour la tranche des panneaux solaires inférieurs, limitative de l'enfoncement des portions d'angle de ces panneaux.

De préférence, ladite paroi supérieure qui délimite les deux logements supérieurs de la pièce de positionnement présente deux bords biseautés, en angle l'un par rapport à l'autre, lui conférant une forme en pointe saillante.

Cette forme est favorable à l'écoulement des eaux de ruissellement le long de cette pièce de positionnement et évite de créer une zone d'ombre qui nuirait à la production électrique des cellules des panneaux photovoltaïques.

Ladite pièce de positionnement peut également comprendre des orifices d'évacuation d'eau au niveau de la paroi transversale délimitant le fond des logements supérieurs.

Le système selon invention peut en outre comprendre tout ou partie des pièces de positionnement supplémentaires mentionnées ci-après, destinées à positionner les panneaux solaires au niveau des bords de la paroi à constituer :
- des deuxièmes pièces de positionnement, permettant le positionnement des panneaux solaires au niveau du bord supérieur de la paroi à constituer, comprenant une nervure centrale et seulement deux logements latéraux inférieurs similaires à ceux de ladite pièce de positionnement précitée ;
- des troisièmes pièces de positionnement, permettant le positionnement des panneaux solaires au niveau du bord inférieur de la paroi à constituer, comprenant une nervure centrale et seulement deux logements latéraux supérieurs similaires à ceux de ladite pièce de positionnement précitée ;
- des quatrièmes pièces de positionnement, permettant le positionnement des panneaux solaires au niveau de l'un ou de l'autre des bords latéraux de la paroi à constituer, comprenant une nervure centrale et seulement un logement latéral supérieur et un logement latéral inférieur, similaires à ceux de ladite pièce de positionnement précitée.

L'invention sera bien comprise, et d'autres caractéristiques et avantages de celle-ci apparaîtront, en référence au dessin schématique annexé, représentant, à titre d'exemples non limitatifs, deux formes de réalisation possibles du système qu'elle concerne.
La figure 1 est une vue en perspective éclatée d'un certain nombre d'éléments de ce système selon une première forme de réalisation, ainsi que de portions d'angle de quatre panneaux solaires ;
la figure 2 est une vue similaire à la figure 1 des mêmes éléments, à l'état assemblé ;
la figure 3 en est une vue en coupe selon la ligne III-III de la figure 2 ;
la figure 4 est une vue en perspective, par-dessous, d'une pièce de positionnement de panneaux solaires que comprend le système, également visible sur les figures 1 à 3 ;
la figure 5 est une vue en perspective d'éléments du système à l'état assemblé, au niveau d'un bord latéral droit d'une toiture ;
la figure 6 est une vue en perspective similaire à la figure 5 de mêmes éléments au niveau d'un bord latéral gauche de la toiture ;
la figure 7 est une vue en perspective d'éléments du système au niveau du faîte de la toiture ;
la figure 8 est une vue en perspective, par-dessous, d'une pièce de positionnement représentée sur la figure 7 ;
la figure 9 est une vue en perspective d'un système de support de panneaux solaires utilisant des éléments du système selon la présente invention, sur une toiture ou terrasse ou sol, qui sont tous horizontaux ou proche de l'horizontale ;
la figure 10 est une vue en perspective, par en dessous, d'une pièce de positionnement selon une deuxième forme de réalisation ;
la figure 11 est une vue en perspective d'un tampon d'appui de panneau solaire, que peut recevoir cette pièce de positionnement ;
la figure 12 est une vue en perspective d'une pièce d'étanchéité utilisable avec la pièce de positionnement selon la figure 10 ;
la figure 13 est une vue en perspective d'une pièce de centrage utilisable avec la pièce de positionnement selon la figure 10 ;
la figure 14 est une vue de côté, partiellement en coupe, des différents éléments du système selon la deuxième forme de réalisation, avant assemblage et mise en place de panneaux solaires, et
la figure 15 est une vue de ces éléments, similaire à la figure 14, après assemblage et mise en place des panneaux solaires.

Par simplification, les parties ou éléments qui se retrouvent de manière identique ou similaire d'une forme de réalisation à l'autre ne seront pas à nouveau décrits et seront désignés par les mêmes références numériques.

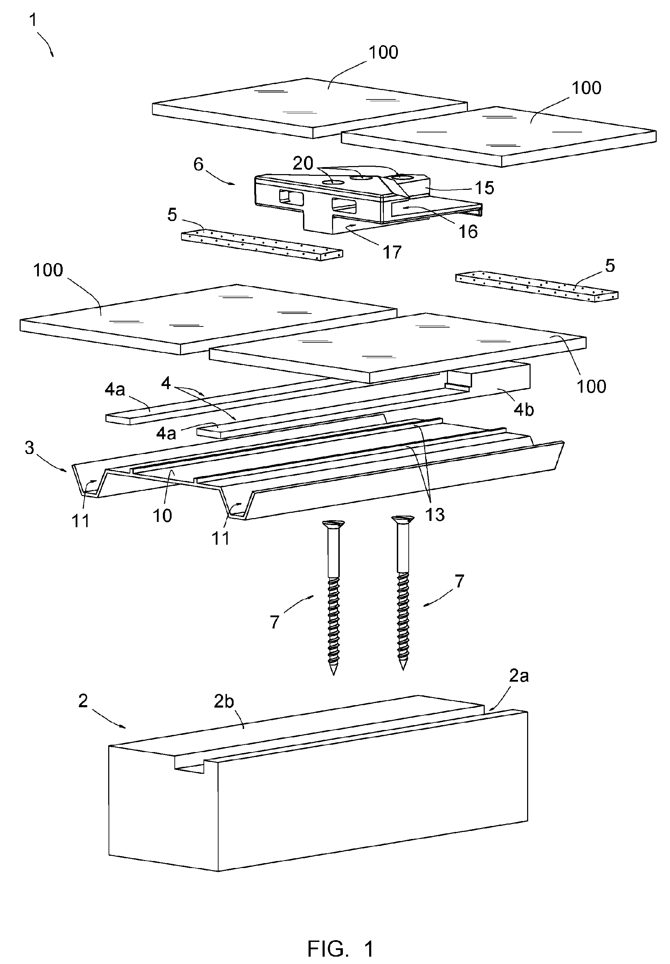

Les figures 1 à 8 représentent un système 1 de réalisation d'une paroi de mise hors d'eau d'un bâtiment, en particulier d'une toiture, utilisant des panneaux solaires 100.

Le système 1 comprend des pièces 2 d'aménagement d'une structure porteuse servant à supporter les panneaux solaires 100, des pièces 3 d'aménagement de gouttières d'évacuation des eaux de ruissellement, des joints longitudinaux d'étanchéité, des joints 5 d'étanchéité transversale, et des pièces 6, 60, 61 de positionnement des panneaux solaires 100 les uns par rapport aux autres.

Chaque pièce 2 d'aménagement de ladite structure porteuse est un chevron en bois, à section carrée ou rectangulaire. Ce chevron 2 est destiné à être fixé sur la charpente de la toiture au moyen de vis 7 dont les têtes prennent place dans une rainure 2a que présente la face supérieure du chevron 2.

Chaque pièce 3 d'aménagement de gouttière est formée par un profilé comprenant une partie plane médiane 10, de montage sur un chevron 2, et deux gouttières latérales 11 destinées à s'étendre le long de ce chevron 2 après fixation à ce dernier. Les pièces 3 sont réalisées en matière synthétique.

La partie de montage 10 est dimensionnée de manière à recouvrir l'intégralité de la face supérieure 2b d'un chevron 2, et présente une largeur correspondant sensiblement à celle de cette face 2b. Elle forme une gouttière ayant pour fonction l'écoulement de l'eau pluviale.

Sur sa face supérieure, la partie de montage 10 comprend deux nervures longitudinales 13, de délimitation de la gouttière que forme cette partie de montage et de positionnement transversal des joints 4.

Chaque joint 4 est en mousse ou est creux. Il reçoit un panneau 100 inférieur, qui le comprime en une partie mince 4a, son extrémité supérieure 4b restant épaisse.

Chaque joint 5 d'étanchéité transversale est formé par une bande de matériau souple dimensionnée pour s'étendre sur l'ensemble de la zone de recouvrement d'un panneau 100 inférieur par un panneau 100 supérieur.

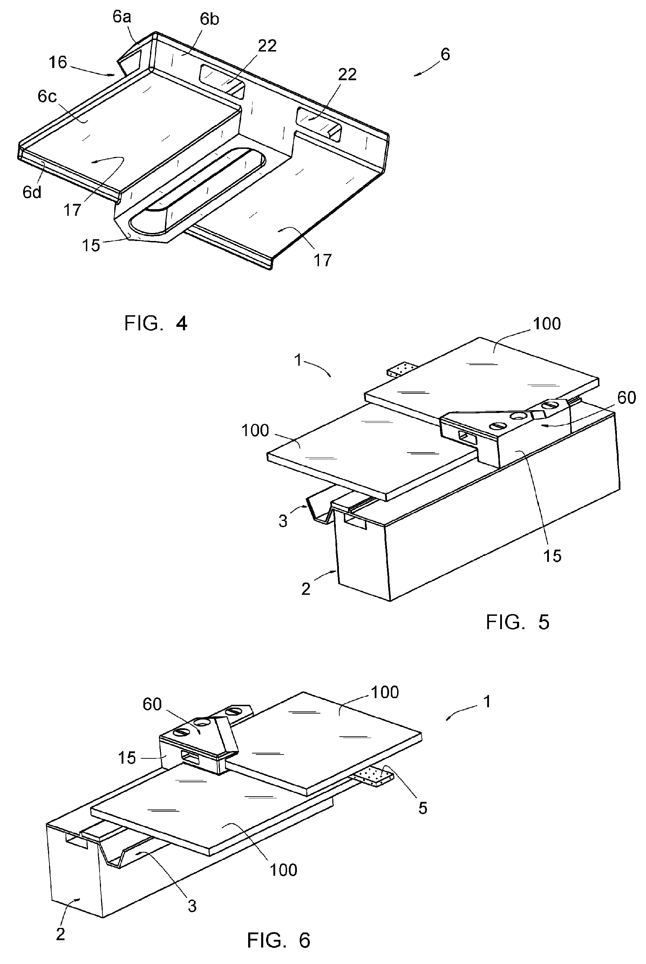

En référence plus particulièrement à la figure 4, il apparaît que chaque pièce de positionnement 6 comprend une nervure centrale 15, deux logements supérieurs 16 de part et d'autre de cette nervure centrale 15, et deux logements inférieurs 17 de part et d'autre de cette nervure centrale 15.

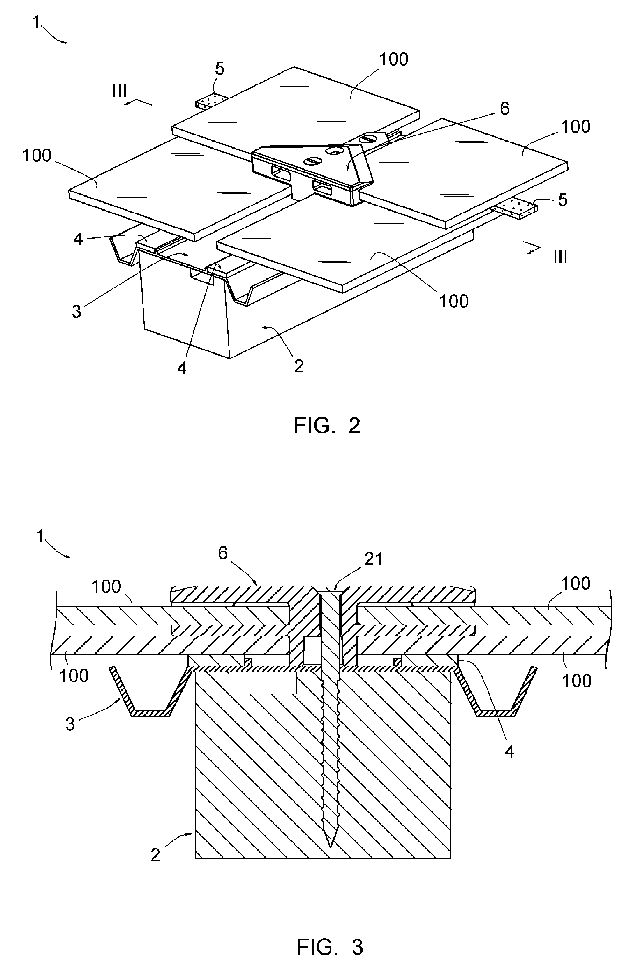

La nervure 15 comprend trois trous 20 qui la traversent de part en part, destinés à recevoir deux vis 21 de fixation de la pièce 6 au chevron 2, une de ces vis étant visible sur la figure 3. La présence de trois trous 20 pour deux vis 21 permet, dans le cas où un trou 20 se trouverait en face d'un tirefond 7, d'utiliser le trou 20 voisin.

La nervure 15 est en outre évidée au niveau de sa face inférieure afin de réduire la quantité de matière nécessaire pour la constituer.

Les deux logements supérieurs 16 sont délimités par une portion de la pièce 6 ayant, vue de profil, une forme en "U", c'est-à-dire apte à envelopper la portion d'angle d'un panneau solaire 100 supérieur, en comprenant des parois supérieure 6a, transversale 6b et inférieure 6c qui sont destinées à s'étendre respectivement le long de la face supérieure, le long de la tranche et le long de la face inférieure de cette portion d'angle.

Les deux logements inférieurs 17 sont délimités par une portion ayant, vue de profil, une forme en "L", c'est-à-dire formée de la paroi 6c, destinée à s'étendre le long de la face supérieure de la portion d'angle d'un panneau solaire 100 inférieur, et par une paroi transversale 6d destinée à former une butée pour la tranche des panneaux solaires 100 inférieurs, limitative de l'enfoncement des portions d'angle de ces panneaux.

La paroi supérieure 6a présente deux bords biseautés, en angle l'un par rapport à l'autre, lui conférant une forme en pointe saillante favorable à l'écoulement des eaux de ruissellement le long d'elle et permettant de ne pas créer de l'ombre sur les cellules photovoltaïques des panneaux 100.

La pièce 6 comprend en outre des orifices 22 au niveau de la paroi transversale 6b, d'évacuation de l'eau pouvant pénétrer dans les logements 16.

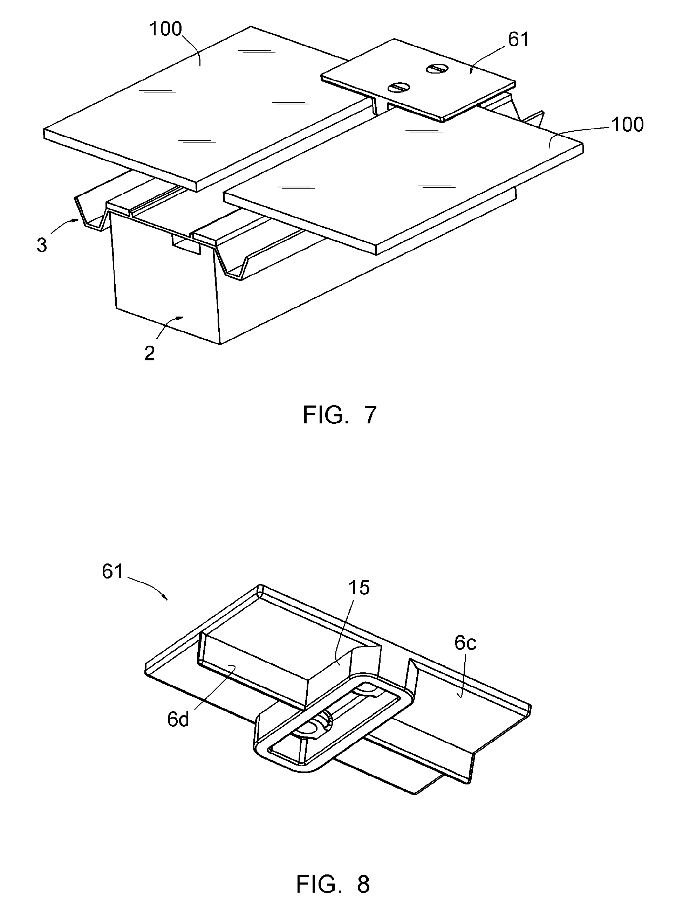

Le système 1 comprend en outre des pièces de positionnement supplémentaires 60, 61 destinées à positionner les panneaux solaires 100 au niveau des bords de la toiture, à savoir :
- des pièces 60 de positionnement de panneaux solaires 100 au niveau de l'un ou de l'autre des bords latéraux de la toiture, comprenant une nervure centrale 15 et seulement un logement latéral supérieur et un logement latéral inférieur, similaires à ceux d'une pièce de positionnement 6 ; l'une des gouttières 11 est, au niveau de ce bord latéral, éliminée de la pièce 3, ou le système comprend des éléments 3 ne comprenant qu'une seule de ces gouttières 11 ;
- des pièces 61 de positionnement de panneaux solaires 100 au niveau du bord supérieur de la toiture (cf. figure 7), comprenant une nervure centrale 15 et seulement deux logements latéraux inférieurs similaires à ceux d'une pièce de positionnement 6, délimités par une paroi supérieure 6c et une paroi transversale 6d ; ces pièces 61 forment également des logements supérieurs du côté des parois 6d opposé aux logements inférieurs, comme le montre la figure 8, faisant qu'elles peuvent être utilisées comme pièces de positionnement de panneaux solaires 100 au niveau du bord inférieur de la toiture ;

En pratique, pour réaliser une toiture en panneaux solaires 100 et comme cela se comprend en référence aux figures 1 à 8, des chevrons 2 identiques les uns aux autres sont fixés sur la partie extérieure d'une charpente au moyen de tirefonds 7, les uns à côté des autres et perpendiculairement au faîte du toit, de telle sorte que ces chevrons 2 coïncident avec les emplacements des bords des panneaux solaires 100 à installer, qui seront perpendiculaires à ce faîte. Ces chevrons 2 constituent ainsi simultanément des pièces d'aménagement de la structure porteuse de la toiture et des pièces de support des gouttières.

Des petits chevrons bois plus étroits (+/- 30 mm), non représentés, sont placés au droit des zones médianes des panneaux 100 pour éviter que ces derniers fléchissent sous le poids de la neige. Un joint entre ces petits chevrons et panneaux 100 permet d'éviter une dégradation des panneaux si ceux-ci vibrent par grand vent.

Des pièces 3 sont coupées à longueur désirées si nécessaire et sont ensuite placées sur les différents chevrons 2, avec chevauchement à leurs extrémités, puis les joints 4 sont disposés longitudinalement sur chaque pièce 3 au niveau des nervures 13, et les pièces 6 sont fixées à l'ensemble au moyen des vis 21, de même que les pièces 60 et 61, le cas échéant.

Les panneaux solaires 100 inférieurs sont alors positionnés sur les joints 4 et engagés dans les logements inférieurs 17.

Les joints 5 d'étanchéité transversale sont ensuite mis en place sur la zone de recouvrement d'un panneau 100 inférieur par un panneau 100 supérieur puis les deux panneaux 100 supérieurs sont mis en place à leur tour.

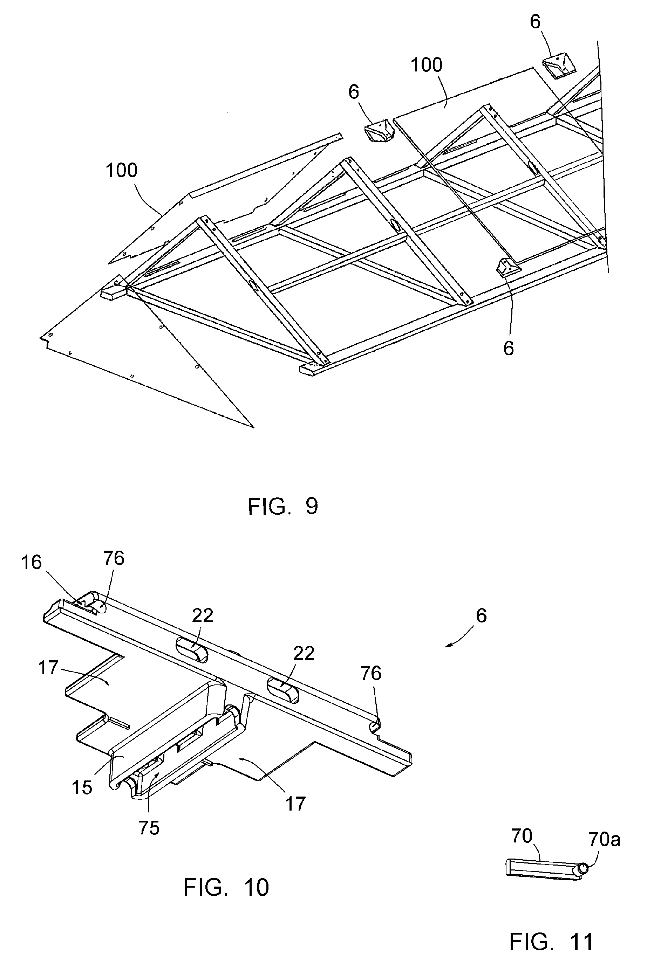

La figure 9 montre que les pièces 6, 60, 61 peuvent également être utilisées sur des structures de support à fermes triangulaires reliées par des poutres, ces structures étant utilisées sur des toitures à très faible pente voire même horizontales.

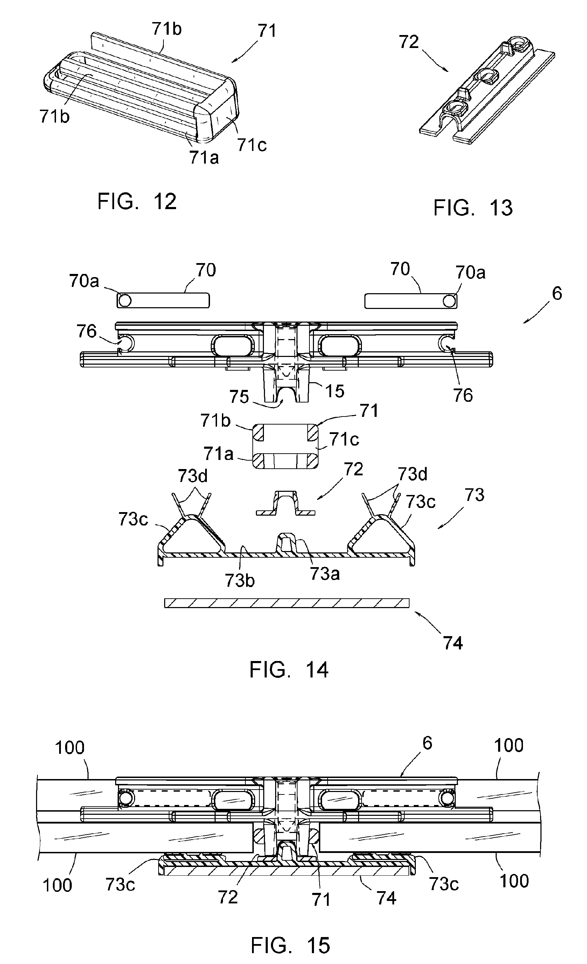

La figure 14 montre divers éléments du système selon la deuxième forme de réalisation, incluant une pièce de positionnement 6 similaire à celle décrite précédemment, des tampons 70 de dilatation et d'appui de panneau solaire, une pièce d'étanchéité 71, une pièce de centrage 72, une pièce d'aménagement de gouttière 73 et un profilé 74 de support de gouttière.
La figure 10 montre la pièce de positionnement 6, qui comprend une rainure de centrage 75 aménagée dans la face inférieure de sa nervure 15. Cette pièce 6 comprend également des orifices 76 de réception d'un plot de montage 70a que comprend chaque tampon 70 de dilatation et d'appui de panneau solaire, visible sur la figure 11, ce tampon 70 étant destiné à être placé dans le fond d'un logement supérieur 16 de la pièce 6, comme visible sur la figure 15.

La pièce d'étanchéité 71 est en matière souple. Elle comprend une base 71 a formant un cadre apte à être engagé de manière ajustée autour de la nervure 15, et deux branches supérieures 71 b reliées à la base 71a par une paroi d'extrémité 71 c.

Comme visible sur la figure 15, les parties latérales de la base 71a sont destinées à recevoir les tranches des panneaux 100 inférieurs et les branches supérieures 71 b, placées dans les logements 16, sont destinées à recevoir les tranches des panneaux 100 supérieurs, la pièce 71 formant ainsi une étanchéité latérale des deux panneaux 100 au niveau de la pièce de positionnement 6.

La pièce de centrage 72 présente une section transversale en oméga et est destinée à être engagée à cheval sur une nervure centrale de positionnement 73a que comprend la pièce 73 d'aménagement de gouttière.

Cette dernière est profilée et est en un matériau souple. Elle comprend une partie centrale 73b de montage sur le profilé 74 de support de gouttière et deux parties latérales compressibles 73c formant des joints latéraux destinés à recevoir les panneaux 100, la gouttière étant délimitée par cette partie centrale 73b et par ces deux parties latérales compressibles 73c. Chaque partie latérale compressible 73c comprend deux lèvres supérieures d'étanchéité 73d destinées à porter contre les panneaux 100.

Le profilé 74 est constitué par un profilé plat de support de la pièce 73, notamment en matière synthétique.

La nervure 73a, la pièce de centrage 72 et la rainure 75 de la pièce 6 permettent un parfait centrage latéral de la pièce 6 par rapport à la pièce 73 et au profilé 74.

Comme cela apparaît de ce qui précède, l'invention fournit un système 1 de réalisation d'un pan de toiture, ou d'une toiture complète, ou autre paroi, utilisant des panneaux solaires 100, ayant pour avantages déterminants de permettre un positionnement optimal des panneaux solaires sur la structure porteuse, de comprendre une structure porteuse et un réseau de gouttières d'évacuation simples d'utilisation et peu onéreux, et très léger.

Un autre avantage de ne pas utiliser de cadres aluminium autour des panneaux voltaïques ni des profiles aluminium ou acier pour la structure porteuse est le fait d'éliminer tout effet "cage de faraday" qui attire la foudre, et tout risque qu'un câble électrique touche une mise à la masse avec risque d'incendie. Le gain financier est important car il n'y a pas d'investissement et le temps nécessaire à la pose d'un fil de terre sur chaque panneau voltaïque et sur la structure porteuse en aluminium ou acier est éliminé.

Il va de soi que l'invention n'est pas limitée aux formes de réalisation décrites ci-dessus à titre d'exemples mais qu'elle s'étend à toutes les formes de réalisations couvertes par les revendications ci-annexées. Ainsi, le terme "toiture" a été utilisé ci-dessus étant donné que le système concerné est principalement destiné à constituer une toiture ; ce terme doit toutefois être considéré dans une acception très large, englobant toute paroi apte à la mise hors d'eau d'une partie ou de la totalité d'un bâtiment, notamment une paroi de mur ou doublant un mur, proche de la verticale. Sur les pièces 6, 60 et 61, les orifices des trous 20 sont fraisés avec un angle de +/- 50° qui est différent de l'angle de 45° des vis 21, pour permettre à la pièce 6, 60 et 61 de se déformer lors du serrage de ces vis et de créer de ce fait un joint qui va étanchéifier ces trous 20. Ces derniers peuvent aussi comprendre une fine membrane qui empêchera à l'eau de passer par les trous non utilisés.

## Revendications

1. - Système (1) de réalisation d'une paroi de mise hors d'eau d'un bâtiment, utilisant des panneaux solaires (100), qui comprend des pièces (2) d'aménagement d'une structure porteuse servant au support des panneaux solaires (100), des profilés (2; 74) destinés à être placés perpendiculairement au bord supérieur de la paroi à réaliser, en dessous des bords des panneaux solaires (100) perpendiculaires audit bord supérieur, des pièces (3; 73) d'aménagement de gouttières d'évacuation des eaux de ruissellement entre des panneaux (100) adjacents, et des pièces (6) de positionnement des panneaux solaires (100) les uns par rapport aux autres,
**caractérisé en ce que** :
- lesdits profilés (2 ; 74) sont distincts des pièces (3 ; 73) d'aménagement de gouttières et servent de supports à ces pièces (3 ; 73) d'aménagement de gouttières ; ces profilés (2 ; 74) de support de gouttières ont une section carrée ou rectangulaire ;
- lesdites pièces (3 ; 73) d'aménagement de gouttières sont distinctes desdits profilés (2 ; 74) de support de gouttières et sont formées par des profilés destinés à être montés sur ces profilés (2 ; 74) de support de gouttières ; et
- chaque pièce (6) de positionnement comprend une nervure centrale (15), destinée à être insérée entre deux panneaux solaires (100) adjacents, deux logements supérieurs (16) de part et d'autre de cette nervure centrale (15), destinés à recevoir de manière ajustée les angles de deux panneaux solaires (100) adjacents, faisant partie d'un rang supérieur de panneaux solaires (100), et deux logements inférieurs (17) de part et d'autre de cette nervure centrale (15), destinés à recevoir de manière ajustée les angles de deux panneaux solaires (100) adjacents, faisant partie d'un rang inférieur de panneaux solaires (100).

2. - Système (1) selon la revendication 1, **caractérisé en ce que**
- lesdites pièces d'aménagement de la structure porteuse sont des chevrons (2) à section carrée ou rectangulaire, et chaque profilé de support de gouttière est constitué par un de ces chevrons (2) ;
- chaque pièce (3) d'aménagement de gouttière comprend une partie de montage (10), destinée à permettre le montage de cette pièce (3) sur un chevron (2), et au moins une gouttière (11) destinée à s'étendre le long de ce chevron après montage sur ce dernier.

3. - Système (1) selon la revendication 2, **caractérisé en ce que** ladite partie de montage (10) que comprend chaque pièce (3) d'aménagement de gouttière est plane et apte à recouvrir l'intégralité, ou au moins une majeure partie, de la face (2a) d'un chevron destinée à recevoir cette pièce (3).

4. - Système (1) selon la revendication 3, **caractérisé en ce que** ladite partie de montage (10) est aménagée en position médiane sur ladite pièce (3) d'aménagement de gouttière, et **en ce que** cette même pièce (3) d'aménagement de gouttière comprend deux gouttières (11) latérales s'étendant le long des bords longitudinaux de cette partie de montage (10).

5. - Système (1) selon la revendication 4, **caractérisé en ce que** ladite partie de montage (10) présente une largeur correspondant sensiblement à celle de ladite face (2a) d'un chevron (2).

6. - Système (1) selon la revendication 1, **caractérisé en ce que** chaque pièce (73) d'aménagement de gouttière est en un matériau souple et comprend une partie centrale (73b) de montage sur un profilé (74) de support de gouttière et deux parties latérales compressibles (73c) formant des joints latéraux destinés à recevoir les panneaux solaires (100), la gouttière étant délimitée par ladite partie centrale de montage (73b) et par ces deux parties latérales compressibles (73c).

7. - Système (1) selon l'une des revendications 1 à 6, **caractérisé en ce que** :
- la nervure centrale (15) de chaque pièce de positionnement (6) comprend une rainure inférieure de centrage (75), et
- la partie centrale (73b) de chaque pièce (73) d'aménagement de gouttière comprend une nervure de centrage (73a) sur laquelle chaque pièce de positionnement (6) est apte à positionnée grâce à la rainure de centrage (75) qu'elle comprend, dans la direction longitudinale de la chaque pièce (73) d'aménagement de gouttière.

8. - Système (1) selon l'une des revendications 1 à 7, **caractérisé en ce que** :
- les deux logements supérieurs (16) de ladite pièce de positionnement (6) sont délimités par une portion de cette pièce ayant, vue de profil, une forme en "U", c'est-à-dire apte à envelopper la portion d'angle d'un panneau solaire (100) supérieur, en comprenant des parois supérieure (6a), transversale (6b) et inférieure (6c) qui sont destinées à s'étendre respectivement le long de la face supérieure, le long de la tranche et le long de la face inférieure de cette portion d'angle ; et
- les deux logements inférieurs (17) de cette même pièce (6) sont délimités par une portion de cette pièce (6) ayant, vue de profil, une forme en "L", c'est-à-dire formée par une paroi supérieure (6c) destinée à s'étendre le long de la face supérieure de la portion d'angle d'un panneau solaire (100) inférieur, et une paroi transversale (6d) destinée à former une butée pour la tranche des panneaux solaires (100) inférieurs, limitative de l'enfoncement des portions d'angle de ces panneaux.

9. - Système (1) selon la revendication 8, **caractérisé en ce que** ladite paroi supérieure (6a) qui délimite les deux logements supérieurs (16) de la pièce de positionnement (6) présente deux bords biseautés, en angle l'un par rapport à l'autre, conférant à cette pièce de positionnement (6) une forme en pointe saillante.

10. - Système (1) selon la revendication 8 ou la revendication 9, **caractérisé en ce que** ladite pièce de positionnement (6) comprend des orifices (22) d'évacuation d'eau au niveau de la paroi transversale (6b) délimitant le fond des logements supérieurs (16).

11. - Système (1) selon l'une des revendications 1 à 10, **caractérisé en ce qu'**il comprend tout ou partie des pièces de positionnement supplémentaires (60, 61) mentionnées ci-après, destinées à positionner les panneaux solaires (100) au niveau des bords de la paroi à constituer :
- des deuxièmes pièces de positionnement (61), permettant le positionnement des panneaux solaires (100) au niveau du bord supérieur de la paroi à constituer, comprenant une nervure centrale (15) et seulement deux logements latéraux inférieurs (17) similaires à ceux de ladite pièce de positionnement (6) précitée ;
- des troisièmes pièces de positionnement (61), permettant le positionnement des panneaux solaires (100) au niveau du bord inférieur de la paroi à constituer, comprenant une nervure centrale (15) et seulement deux logements latéraux supérieurs (16) similaires à ceux de ladite pièce de positionnement (6) précitée ;
- des quatrièmes pièces de positionnement (60), permettant le positionnement des panneaux solaires (100) au niveau de l'un ou de l'autre des bords latéraux de la paroi à constituer, comprenant une nervure centrale (15) et seulement un logement latéral supérieur (16) et un logement latéral inférieur (17), similaires à ceux de ladite pièce de positionnement (6) précitée.
